# EUROPÄISCHE PATENTSCHRIFT

(11) **EP 3 150 426 B1**
(45) Veröffentlichungstag und Bekanntmachung des Hinweises auf die Patenterteilung: **25.07.2018**
(21) Anmeldenummer: 16190646.6
(22) Anmeldetag: 26.09.2016
(51) Int. Cl.: B60N 2/015, B60N 2/07

(54) **SCHIENE FÜR EINEN SITZ EINES KRAFTFAHRZEUGES SOWIE SITZSCHIENENSYSTEM FÜR EIN KRAFTFAHRZEUG**
RAIL FOR A SEAT OF A MOTOR VEHICLE, AND SEAT RAIL SYSTEM FOR A MOTOR VEHICLE
RAIL POUR UN SIÈGE DE VÉHICULE AUTOMOBILE ET SYSTÈME DE RAILS DE SIÈGE POUR UN VÉHICULE AUTOMOBILE

(30) Priorität: 02.10.2015 DE 102015116791; 20.07.2016 DE 102016113409
(43) Veröffentlichungstag der Anmeldung: 05.04.2017
(73) Patentinhaber: Tillmann Profil GmbH, 59846 Sundern (DE)
(72) Erfinder: Böhm, Ekkehard, 59846 Sundern (DE); Spiekermann, Markus, 53909 Zülpich (DE); Haberkorn, Eduard, 51491 Overath (DE); Fischer, Alexander, 57482 Wenden (DE); Heße, Markus, 57462 Olpe (DE); Dr. Klein, Nicole, 57555 Mudersbach (DE)
(74) Vertreter: Basfeld, Rainer

(56) Entgegenhaltungen:
- EP-A1- 0 949 112
- FR-A1- 2 762 811
- FR-A1- 2 864 481

## Beschreibung

Die vorliegende Erfindung betrifft eine Schiene für einen Sitz eines Kraftfahrzeugs gemäß dem Oberbegriff des Anspruchs 1 sowie ein Sitzschienensystem für ein Kraftfahrzeug gemäß dem Oberbegriff des Anspruchs 6.

Eine Schiene und ein Sitzschienensystem der vorgenannten Art sind aus der FR 2 864 481 A1 bekannt. Die darin beschriebene Schiene umfasst eine Basis und zwei daran angeordnete Schenkel. Die Schenkel weisen jeweils einen sich an die Basis anschließenden Abschnitt auf, der sich unter einem stumpfen Winkel von der Basis wegerstreckt. An diesen Abschnitt schließt sich jeweils ein unter einem rechten Winkel zur Basis ausgerichteter Abschnitt an. An diesen Abschnitt schließt sich jeweils ein parallel zur Basis nach innen verlaufender Abschnitt an, von dem sich jeweils ein mehrfach gebogener endseitiger Abschnitt nach oben und nach außen erstreckt. In den parallel zur Basis nach innen verlaufenden Abschnitten sind nach unten geöffnete Schlitze vorgesehen, in die Verriegelungselemente von Haltemitteln eingreifen können, die mit einem Sitz eines Kraftfahrzeugs verbunden sein können.

Eine weitere Schiene und ein weiteres Sitzschienensystem sind aus der EP 0 949 112 A1 bekannt. Die darin beschriebene Schiene umfasst eine Basis und zwei daran angeordnete Schenkel. Die Schenkel weisen jeweils einen sich an die Basis anschließenden Abschnitt auf, der sich unter einem rechten Winkel von der Basis wegerstreckt. In sich von diesen Abschnitten etwa parallel zur Basis nach innen erstreckenden Abschnitten sind nach unten geöffnete Schlitze vorgesehen, in die Verriegelungselemente von Haltemitteln eingreifen können.

Eine weitere Schiene und ein weiteres Sitzschienensystem sind aus der FR 2 762 811 A1 bekannt. Die darin beschriebene Schiene umfasst eine Basis und zwei daran angeordnete Schenkel. Die Schenkel weisen jeweils einen sich an die Basis anschließenden Abschnitt auf, der sich unter einem rechten Winkel von der Basis wegerstreckt. An diesen Abschnitt schließt sich jeweils ein parallel zur Basis nach innen verlaufender Abschnitt an, von dem ein weiterer Abschnitt senkrecht nach unten ragt. An diesen Abschnitt schließt sich jeweils ein abschnittsweise parallel zur Basis nach außen verlaufender Abschnitt an, der endseitig mit dem von der Basis senkrecht nach oben verlaufenden Abschnitt verschweißt ist. In den abschnittsweise parallel zur Basis nach außen verlaufenden Abschnitten sind nach unten geöffnete Schlitze vorgesehen, in die Verriegelungselemente von Haltemitteln eingreifen können.

Eine weitere Schiene und ein weiteres Sitzschienensystem sind aus der EP 1 359 050 A2 bekannt. Die darin beschriebene Schiene umfasst eine Basis und zwei daran angeordnete Schenkel. Die Schenkel weisen jeweils einen sich an die Basis anschließenden Abschnitt auf, der sich unter einem rechten Winkel von der Basis wegerstreckt. An diesen Abschnitt schließt sich ein parallel zur Basis verlaufender Abschnitt an, von dem ein endseitiger Abschnitt senkrecht nach unten ragt. In dem endseitigen Abschnitt sind nach unten geöffnete Schlitze vorgesehen, in die Verriegelungselemente von Haltemitteln eingreifen können, die mit einem Sitz eines Kraftfahrzeugs verbunden sein können.

Ausgehend von diesem Stand der Technik ist die Entwicklung eines innovativen Sitzschienensystems wünschenswert. Bei einem zu entwickelnden Sitzschienensystem könnte es sinnvoll sein, wenn der Sitz an jeder Stelle in Längsrichtung der Schiene entnehmbar und einsetzbar ist. Weiterhin wäre es wünschenswert, dass die Sitzposition verstellbar ist. Auch eine crashsichere Verriegelung wäre vorteilhaft. Ein weiterer anzustrebender Vorteil ist eine Vorbereitung für eine Elektrifizierung des Sitzes. Bei einer derartigen Entwicklung sollten möglichst eine Gewichtseinsparung, eine Kostenreduktion und ein geringer Fertigungsaufwand erreicht werden.

Aufgabe der vorliegenden Erfindung ist somit die Schaffung einer Schiene und eines Sitzschienensystems, die insbesondere leichter und/oder kostengünstiger und/oder einfacher herstellbar sind.

Dies wird durch eine Schiene mit den Merkmalen des Anspruchs 1 und ein Sitzschienensystem mit den Merkmalen des Anspruchs 6 erreicht. Die Unteransprüche betreffen bevorzugte Ausgestaltungen der Erfindung.

Gemäß Anspruch 1 ist vorgesehen, dass beide Schenkel mit der Basis einen Winkel von weniger als 90° einschließen, wobei die Ränder nach außen umgebogen sind, und wobei die Verriegelungsmittel in den sich von der Basis wegerstreckenden Abschnitten der Schenkel angeordnet sind, und/oder dass jeweils ein Abschnitt eines jeden der Schenkel unter einem Winkel von weniger als 90° zur Basis ausgerichtet ist, wobei die Ränder nach innen umgebogen sind und wobei die Verriegelungsmittel in den sich nach innen in Richtung auf die Basis erstreckenden Abschnitten der Schenkel angeordnet sind. Beispielsweise können dabei die Winkel zwischen 30° und 60°, vorzugsweise zwischen 40° und 50° groß sein. Durch die zu der Basis geneigten Abschnitte der Schenkel der Schiene kann deren Steifigkeit erhöht werden, so dass eine geringere Materialstärke für eine vergleichbare mechanische Beanspruchbarkeit notwendig wird. Dies führt zu einer Gewichtseinsparung und zu einer Senkung der Fertigungskosten.

Es besteht die Möglichkeit, dass die endseitigen Abschnitte der Schenkel mit der Basis oder einem sich an die Basis anschließenden Abschnitt der Schenkel verschweißt werden, wodurch die Steifigkeit der Schiene zusätzlich erhöht werden kann.

Durch die Ausbildung der Verriegelungsmittel in den unter einem Winkel ungleich 90° ausgerichteten Abschnitten der Schenkel kann die Festigkeit der Verbindung zwischen Schiene und Haltemitteln vergrößert werden, so dass auch eine crashsichere Verriegelung vorliegt.

Weiterhin kann vorgesehen sein, dass die Schiene elektrische Leitermittel für den Sitz aufweist, wobei die Leitermittel beispielsweise Leiterbahnen sein können. Die Leitermittel können in durch die umgebogenen Ränder entstandenen Aufnahmen oder Kammern angeordnet sein. Auf diese Weise kann mit einfachen Mitteln eine Elektrifizierung des Sitzes vorbereitet werden.

Gemäß Anspruch 6 ist vorgesehen, dass die Schiene eine erfindungsgemäße Schiene ist.

Beispielsweise können die Haltemittel zumindest teilweise aufgespreizt werden, so dass die aufgespreizten Teile mit Verriegelungsmitteln der Aufnahme für die Festlegung der Haltemittel zusammenwirken können.

Insbesondere kann an den Haltemitteln mindestens ein Verriegelungselement ausgeklappt oder ausgefahren werden, das mit Verriegelungsmitteln der Aufnahme für die Festlegung der Haltemittel zusammenwirken kann.

Es kann vorgesehen sein, dass die Haltemittel zumindest teilweise verdreht werden können, so dass die verdrehten Teile mit Verriegelungsmitteln der Aufnahme für die Festlegung der Haltemittel zusammenwirken können. Auf diese Weise können die Haltemittel wie ein Schlüssel in der Aufnahme verdreht werden und zur Verriegelung beitragen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: einen Querschnitt durch eine erste Ausführungsform eines erfindungsgemäßen Sitzschienensystems mit einer ersten Ausführungsform einer erfindungsgemäßen Schiene und einer ersten Ausführungsform von Haltemitteln in einer ersten Stellung;
- Fig. 2: eine Fig. 1 entsprechende Ansicht des Sitzschienensystems gemäß Fig. 1 in einer zweiten Stellung der Haltemittel;
- Fig. 3: eine Fig. 1 entsprechende Ansicht des Sitzschienensystems gemäß Fig. 1 in einer dritten Stellung der Haltemittel;
- Fig. 4: ein Detail der Fig. 3;
- Fig. 5: eine perspektivische Detailansicht des Sitzschienensystems gemäß Fig. 1 in der dritten Stellung der Haltemittel;
- Fig. 6: eine perspektivische Detailansicht des Sitzschienensystems gemäß Fig. 1 in der dritten Stellung der Haltemittel, wobei zur Verdeutlichung einer der Schenkel der Sitzschiene nicht dargestellt ist;
- Fig. 7: einen Querschnitt durch eine zweite Ausführungsform eines erfindungsgemäßen Sitzschienensystems mit der ersten Ausführungsform einer erfindungsgemäßen Schiene und einer zweiten Ausführungsform von Haltemitteln in einer ersten Stellung;
- Fig. 8: eine Fig. 7 entsprechende Ansicht des Sitzschienensystems gemäß Fig. 7 in einer zweiten Stellung der Haltemittel;
- Fig. 9: eine Fig. 7 entsprechende Ansicht des Sitzschienensystems gemäß Fig. 7 in einer dritten Stellung der Haltemittel;
- Fig. 10: eine perspektivische Detailansicht einer dritten Ausführungsform eines erfindungsgemäßen Sitzschienensystems mit der ersten Ausführungsform einer erfindungsgemäßen Schiene und einer dritten Ausführungsform von Haltemitteln in einer dritten Stellung der Haltemittel;
- Fig. 11: einen Querschnitt durch eine zweite Ausführungsform einer erfindungsgemäßen Schiene;
- Fig. 12: eine perspektivische Detailansicht einer vierten Ausführungsform eines erfindungsgemäßen Sitzschienensystems mit der zweiten Ausführungsform einer erfindungsgemäßen Schiene und der dritten Ausführungsform von Haltemitteln in der dritten Stellung der Haltemittel;
- Fig. 13: einen Querschnitt durch ein nicht von der Erfindung umfasstes Sitzschienensystem mit einer nicht von der Erfindung umfassten Schiene und Haltemitteln in einer ersten Stellung;
- Fig. 14: eine Fig. 13 entsprechende Ansicht des Sitzschienensystems gemäß Fig. 13 in einer zweiten Stellung der Haltemittel;
- Fig. 15: eine Fig. 13 entsprechende Ansicht des Sitzschienensystems gemäß Fig. 13 in einer dritten Stellung der Haltemittel;
- Fig. 16: eine perspektivische Detailansicht des Sitzschienensystems gemäß Fig. 13 in der dritten Stellung der Haltemittel;
- Fig. 17: eine perspektivische Detailansicht des Sitzschienensystems gemäß Fig. 13 in der dritten Stellung der Haltemittel, wobei zur Verdeutlichung einer der Schenkel der Sitzschiene nicht dargestellt ist.

In den Figuren sind gleiche oder funktional gleiche Teile mit gleichen Bezugszeichen versehen. In einigen der Figuren ist ein kartesisches Koordinatensystem eingezeichnet, um die Orientierung zu erleichtern.

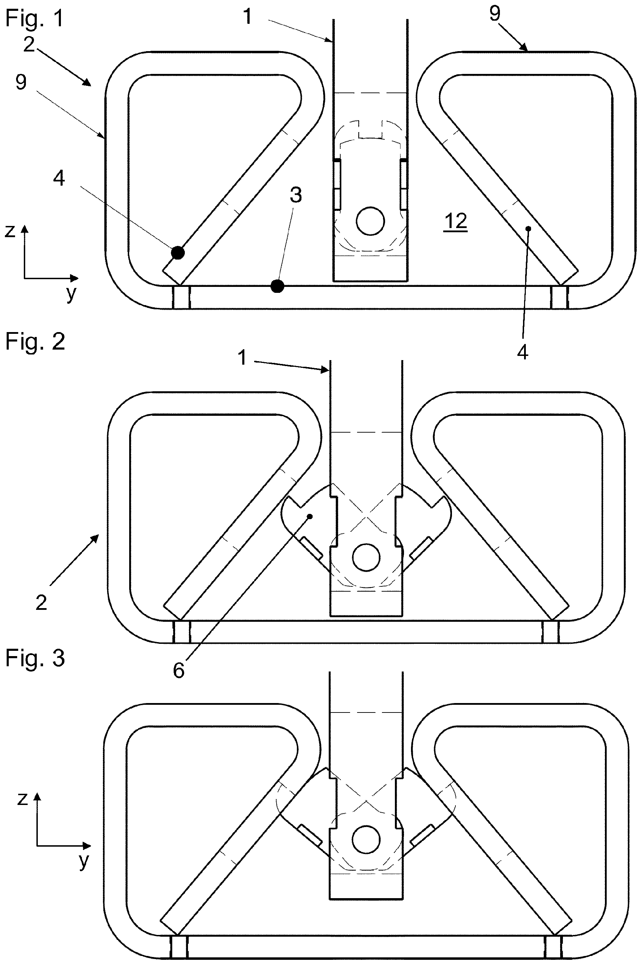

Die in Fig. 1 bis Fig. 6 abgebildete Ausführungsform eines Sitzschienensystems umfasst Haltemittel 1, die ähnlich einem Klappanker ausgebildet sind, sowie eine Schiene 2. Die Schiene 2 weist eine Basis 3 auf, von der sich Schenkel 9 unter einem rechten Winkel wegerstrecken. Die Schenkel 9 der Schiene 2 sind zweimal umgebogen und weisen an ihren Enden sich unter einem Winkel von etwa 45° zur Basis 3 und nach außen erstreckende Abschnitte 4 auf. Der Raum zwischen den Abschnitten 4 dient als Aufnahme 12 für die Haltemittel 1 beziehungsweise mindestens einen Abschnitt der Haltemittel 1.

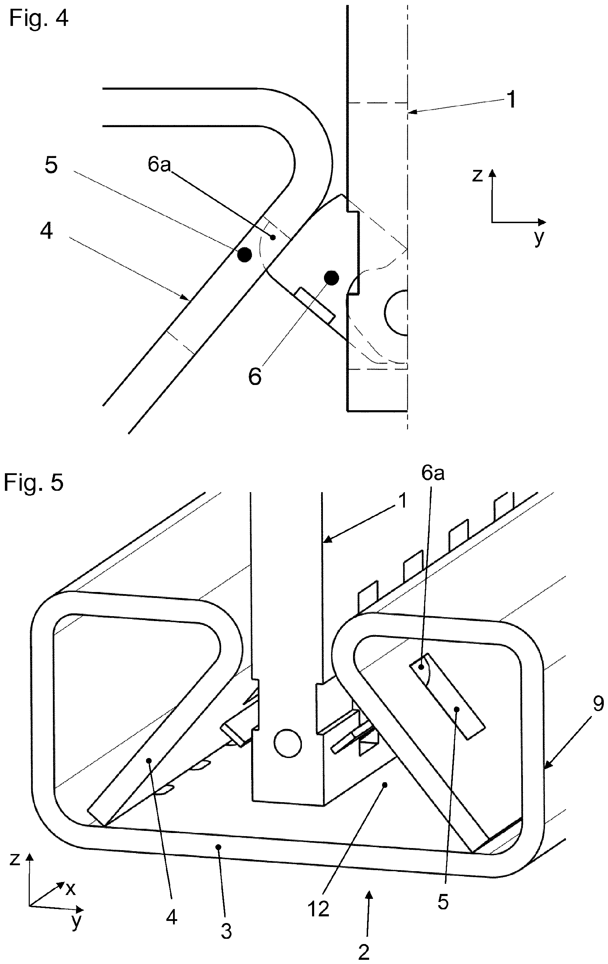

In den Abschnitten 4 sind in Schienenlängsrichtung, die sich in die Zeichenebene der Fig. 1 bis 3 beziehungsweise in die X-Richtung der eingezeichneten Koordinatensysteme erstreckt, zueinander beabstandete Schlitze 5 als Verriegelungsmittel angeordnet (siehe Fig. 4 und Fig. 5). In diese Schlitze 5 können ausklappbare Verriegelungselemente 6 der Haltemittel 1 eingreifen, die wie Rasthaken ausgebildet sind. Die Verriegelungselemente 6 umfassen für den Eingriff an ihren Enden angeordnete Vorsprünge 6a (siehe beispielsweise Fig. 4 und Fig. 5). Die Vorsprünge 6a weisen dabei in X-Richtung eine Ausdehnung auf, die der Ausdehnung der Schlitze 5 in X-Richtung entspricht.

Die Verbindung geschieht dadurch, dass die Haltemittel 1 in die Schiene 2 eintauchen bis die Position gemäß Fig. 1 erreicht ist. Für die Eintauchbewegung können höhenverstellbare Rollen vorgesehen sein. Die Verriegelungselemente 6 sind mit einer Feder vorgespannt. Sie werden durch eine Knopf- oder Hebelbetätigung gelöst und springen bis zum Anschlag auf. Sie befinden sich nun in der in Fig. 2 abgebildeten Stellung. In dieser Stellung oder Position kann ein mit den Haltemitteln 1 verbundener Sitz in der Fahrzeuglängsrichtung beziehungsweise in der X-Richtung verstellt werden.

Die Arretierung in X-Richtung erfolgt durch die Höhenverstellung in positive Z-Richtung. Dabei fahren beziehungsweise rutschen die Vorsprünge 6a der Verriegelungselemente 6 in die vorgesehenen Schlitze 5 der Schiene 2 (siehe Fig. 3 und Fig. 4). In dieser dritten Stellung der Haltemittel 1 ist der Sitz positioniert, gesichert und spielfrei vorgespannt. Die Kraftübertragung zwischen den Haltemitteln 1 und der Schiene 2 erfolgt wegen des passenden Eingriffs der Vorsprünge 6a in die Schlitze 5 (siehe Fig. 4 und Fig. 5) über einen mehrflächigen Formschluss.

Der Sitzeinbau und Sitzausbau sowie die Sitzverstellung können über zwei unabhängige Hebelmechanismen bewirkt werden. Für den Sitzeinbau und den Sitzausbau werden die Verriegelungselemente 6 über einen ersten Hebel in die Haltemittel 1 eingefahren und dadurch vorgespannt. Sobald der Sitz in der Schiene 2 eingebaut ist, wird ein vorgespannter zweiter Hebel in der Sitzposition betätigt, um den Sitz abzusenken. Sobald der Sitz vollständig abgesenkt wurde und damit die Haltemittel 1 in der Schiene 2 angeordnet sind, werden die Verriegelungselemente 6 ausgeklappt (siehe Fig. 2).

Es kann eine Sicherheitsmaßnahme vorgesehen sein, die bei einem versehentlichen Loslassen des zweiten Hebels durch den Insassen Wirkung entfaltet. In diesem Fall bewegt sich die Sitzverriegelung in ihre Arretierlage zurück und sichert so den Sitz gegen Verrutschen, wobei die Vorsprünge 6a der Verriegelungselemente 6 in die Schlitze 5 eingreifen.

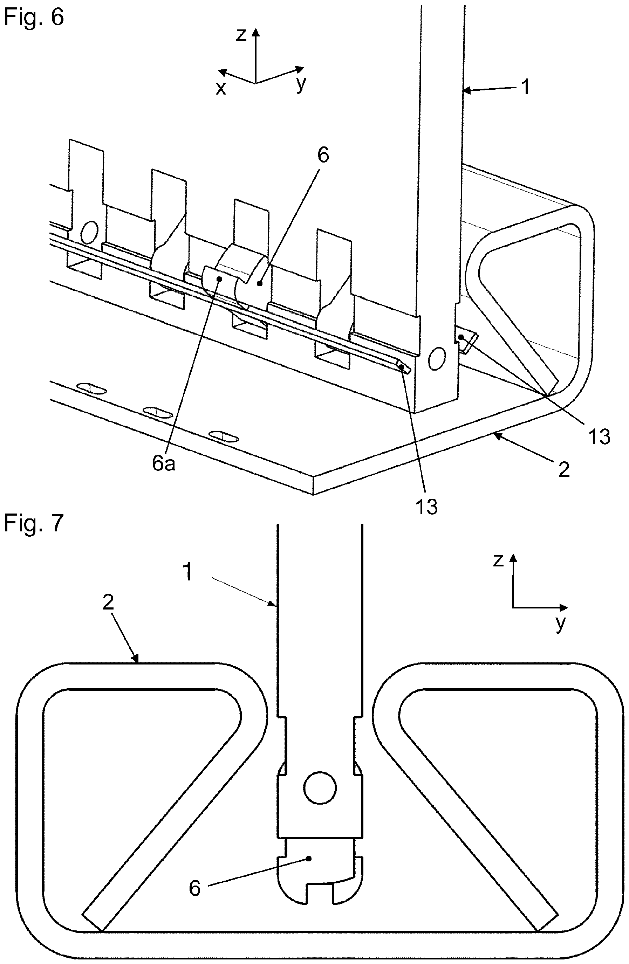

In Fig. 6 sind zwei Stangen 13 eingezeichnet, die jeweils eine gemeinsame Betätigung der Verriegelungselemente 6 ermöglichen. Diese Stangen 13 sind optional und können auch weggelassen werden.

In den Fig. 7 bis Fig. 9 ist eine Ausführungsform eines Sitzschienensystems abgebildet, das die gleiche Schiene 2 nutzt. Unterschiedlich zu der ersten Ausführungsform sind bei dieser Ausführungsform die Haltemittel 1 gestaltet. Sie sind ebenfalls ähnlich einem Klappanker ausgebildet. Unterschiedlich zu der ersten Ausführungsform ist der Ablauf der Verbindung zwischen den Haltemitteln 1 und der Schiene 2.

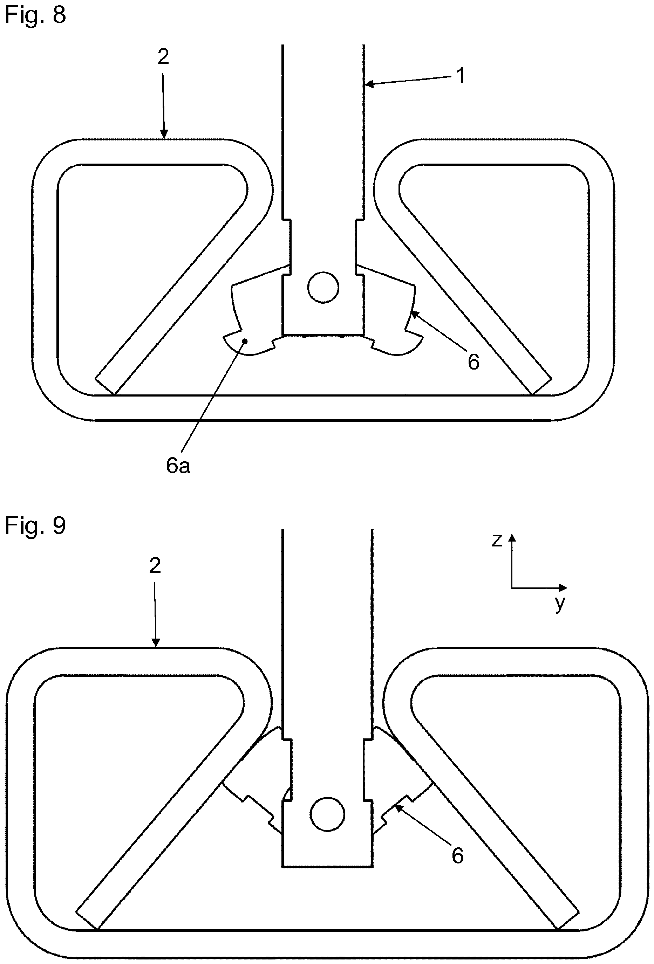

In der Ausgangslage weist der Sitz eine feste Position auf, wobei die Verriegelungselemente 6 der Haltemittel 1 nach unten eingeklappt sind und so durch die Profilöffnung der Schiene 2 passen (siehe Fig. 7). In einem nächsten Verbindungsschritt werden die Verriegelungselemente 6 in eine zweite Stellung überführt (siehe Fig. 8). In dieser Stellung kann die Sitzposition verstellt werden, ohne dass der Sitz entnommen werden kann.

Im Gegensatz zu der ersten Ausführungsform des Sitzschienensystems gemäß den Fig. 1 bis Fig.6 werden bei der zweiten Ausführungsform gemäß den Fig. 7 bis Fig. 9 die Verriegelungselemente 6 nicht durch Bewegung der Haltemittel 1 in Z-Richtung in Eingriff mit den Schlitzen 5 der Schiene 2 gebracht. Vielmehr werden die Verriegelungselemente 6 weiter ausgeklappt, bis die Vorsprünge 6a der Verriegelungselemente 6 in die Schlitze 5 hineinragen (siehe Fig. 9). In dieser dritten Stellung der Haltemittel 1 ist der Sitz positioniert, gesichert und spielfrei vorgespannt.

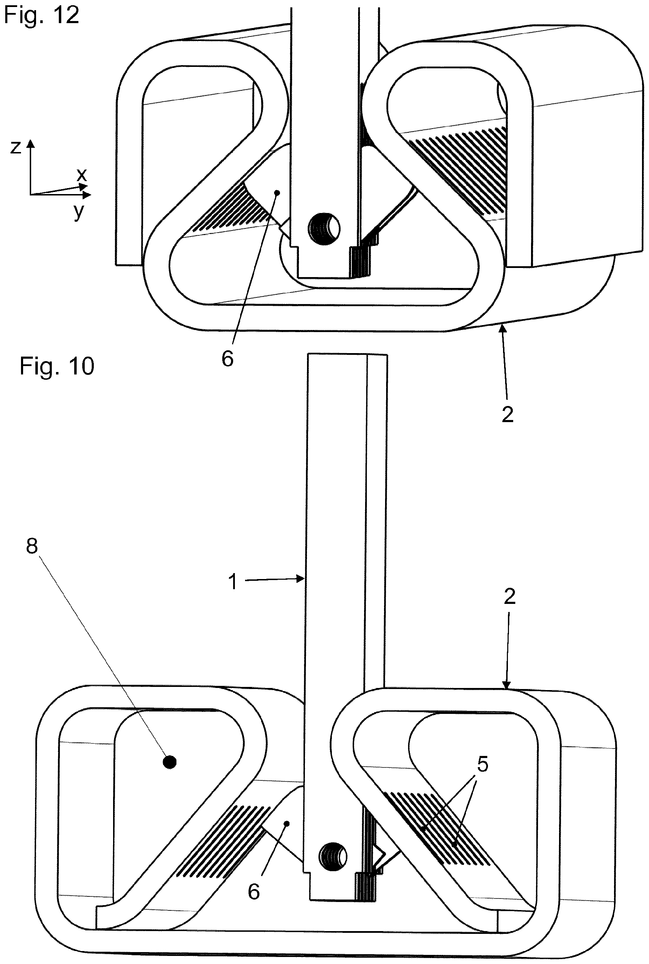

Fig. 10 zeigt eine Ausführungsform, die im Wesentlichen derjenigen gemäß den Fig. 7 bis Fig. 9 entspricht. Lediglich die Form der Haltemittel 1, insbesondere die Form der Verriegelungselemente 6 ist etwas unterschiedlich zu derjenigen der Ausführungsform gemäß den Fig. 7 bis Fig. 9.

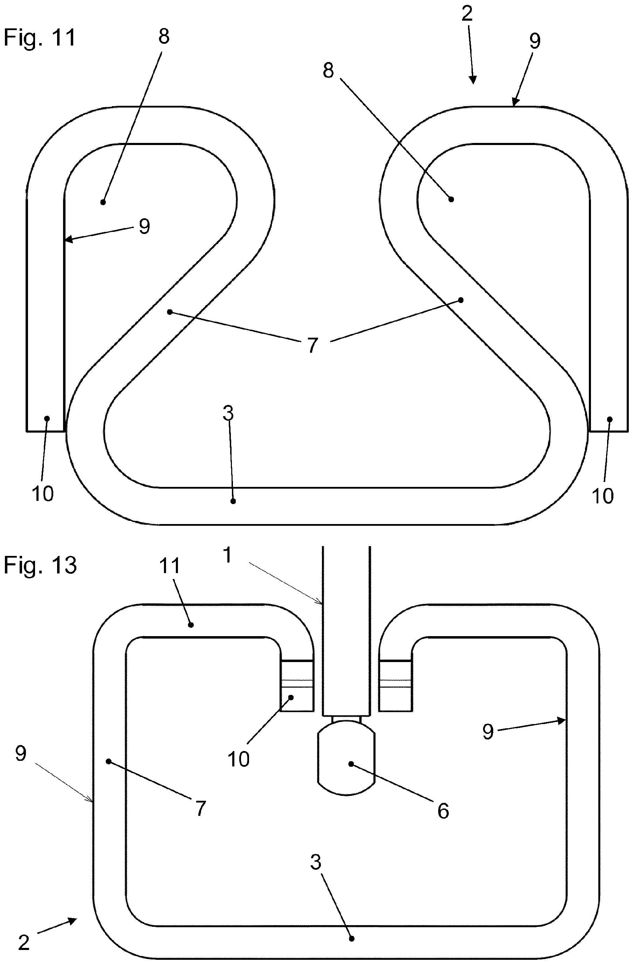

Fig. 11 und Fig. 12 zeigen eine vierte Ausführungsform eines Schienensystems mit einer Schiene 2, bei der die Schenkel 9 der Schiene 2 ebenfalls zweimal umgebogen sind. Dabei verlaufen die an die Basis 3 anschließenden Abschnitte 7 der Schenkel 9 unter einem Winkel von etwa 45° zur Basis 3. In dem Abschnitt 7 oder in den Abschnitten 7 sind dabei in Schienenlängsrichtung beziehungsweise in X-Richtung zueinander beabstandete Schlitze 5 als Verriegelungsmittel angeordnet.

An ihrem Ende sind die Schenkel 9 zweimal nach außen umgebogen (siehe Fig. 11). Die endseitigen Abschnitte 10 der Schenkel 9 können mit der Basis 3 beziehungsweise dem sich an die Basis 3 anschließenden Abschnitt 7 der Schenkel 9 verschweißt sein. Die in Fig. 12 abgebildete Ausführungsform weist eine größere Steifigkeit in Auszugsrichtung beziehungsweise in Z-Richtung auf als die in Fig. 10 abgebildete Ausführungsform.

Abschnitte der Schenkel 9 können auch bei den anderen in dieser Anmeldung beschriebenen Ausführungsformen mit der Basis 3 oder einem sich an die Basis anschließenden Abschnitt der Schenkel 9 verschweißt sein, wodurch auch bei diesen Ausführungsformen die Steifigkeit erhöht werden kann.

In den durch die Umbiegungen entstehenden Kammern 8 der Ausführungsformen der Schiene 2 gemäß den Fig. 1 bis Fig. 12 können Leitermittel in Form von Leiterbahnen vorgesehen sein.

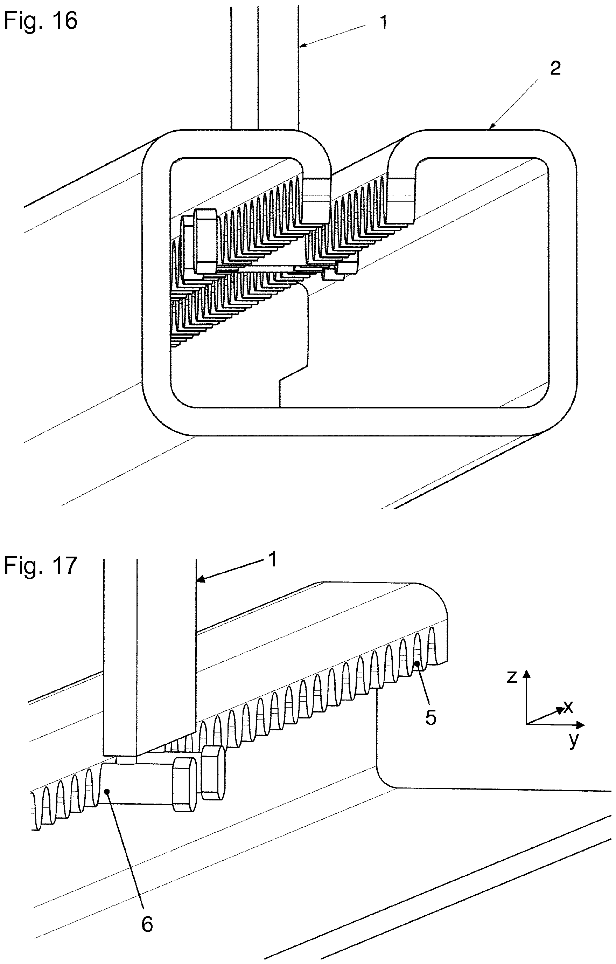

Die in Fig. 13 bis Fig. 17 abgebildete Ausführungsform eines Sitzschienensystems umfasst eine Schiene 2, deren Schenkel 9 jeweils einen sich an die Basis 3 anschließenden Abschnitt 7 aufweisen, der sich unter einem rechten Winkel von der Basis 3 wegerstreckt. An diesen Abschnitt 7 schließt sich ein parallel zur Basis 3 verlaufender Abschnitt 11 an, von dem ein endseitiger Abschnitt 10 senkrecht nach unten ragt. In dem endseitigen Abschnitt 10 sind nach unten geöffnete Schlitze 5 vorgesehen, in die im Nachfolgenden noch detaillierter beschriebene Verriegelungselemente 6 der Haltemittel 1 eingreifen können.

Die Haltemittel 1 der in Fig. 13 bis Fig. 17 abgebildeten Ausführungsform eines Sitzschienensystems sind ähnlich einem Schlüssel ausgebildet. Am Beginn einer Verbindung zwischen den Haltemitteln 1 und der Schiene 2 befinden sich die Verriegelungselemente 6 in einer Stellung parallel zur Schienenlängsrichtung beziehungsweise zur X-Richtung. In dieser Stellung werden sie mit Hilfe einer Höhenverstellung von oben in die Schiene 2 eingefahren (siehe Fig. 13).

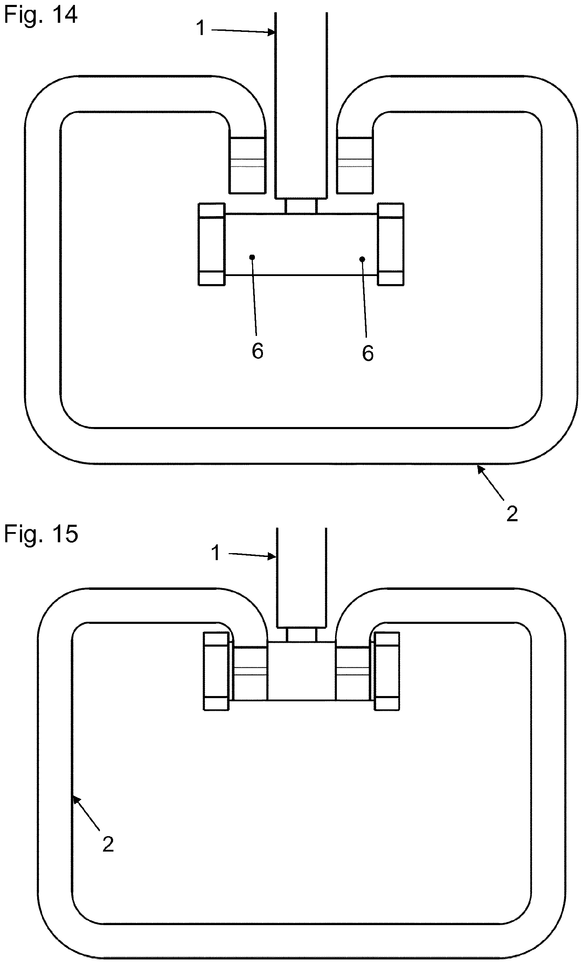

Es folgt eine Drehung der Haltemittel 1 um 90° und damit eine Ausrichtung der Verriegelungselemente 6 quer zur Schienenlängsrichtung beziehungsweise in Y-Richtung (siehe Fig. 14). Der Sitz kann in dieser Stellung der Haltemittel in Fahrzeuglängsrichtung beziehungsweise in X-Richtung verstellt werden.

Die Arretierung in X-Richtung erfolgt durch die Höhenverstellung in positiver Z-Richtung. Dabei fahren beziehungsweise rutschen die Verriegelungselemente 6 in die dafür im Schienenprofil vorgesehenen Schlitze 5 (siehe Fig. 15 bis 17). Der Sitz ist in dieser dritten Stellung der Haltemittel 1 positioniert, gesichert und klapperfrei vorgespannt.

Die Schienen 2 sämtlicher Ausführungsformen können vorzugsweise aus Stahl, beispielsweise aus Edelstahl gefertigt sein.

## Patentansprüche

1. Schiene (2) für einen Sitz eines Kraftfahrzeugs, umfassend
- eine Aufnahme (12), in die Haltemittel (1) für einen in Schienenlängsrichtung verschiebbaren Sitz einbringbar sind,
- eine Mehrzahl von in Längsrichtung der Schiene nebeneinander angeordneten Verriegelungsmitteln für die Haltemittel (1), die eine Festlegung des Sitzes in einer gewünschten Position ermöglichen,
- eine Basis (3) und zwei sich von der Basis (3) wegerstreckende Schenkel (9), zwischen denen oder an denen die Aufnahme (12) für die Haltemittel (1) ausgebildet ist, wobei die Schenkel (9) an ihren von der Basis (3) abgewandten Seiten zweifach umgebogene Ränder aufweisen,
**dadurch gekennzeichnet, dass**
- beide Schenkel (9) mit der Basis (3) einen Winkel von weniger als 90° einschließen, wobei die Ränder nach außen umgebogen sind, und wobei die Verriegelungsmittel in den sich von der Basis (3) wegerstreckenden Abschnitten (7) der Schenkel (9) angeordnet sind,
und/oder dass
- jeweils ein Abschnitt (4, 11) eines jeden der Schenkel (9) unter einem Winkel von weniger als 90° zur Basis (3) ausgerichtet ist, wobei die Ränder nach innen umgebogen sind und wobei die Verriegelungsmittel in den sich nach innen in Richtung auf die Basis (3) erstreckenden Abschnitten (4) der Schenkel (9) angeordnet sind.

2. Schiene (2) nach Anspruch 1, **dadurch gekennzeichnet, dass** die Winkel zwischen 30° und 60°, vorzugsweise zwischen 40° und 50° groß sind.

3. Schiene (2) nach einem der Ansprüche 1 oder 2, **dadurch gekennzeichnet, dass** die Verriegelungsmittel Schlitze (5) oder Öffnungen in den Schenkeln (9) sind.

4. Schiene (2) nach einem der Ansprüche 1 bis 3, **dadurch gekennzeichnet, dass** die Schiene (2) elektrische Leitermittel für den Sitz aufweist, wobei die Leitermittel beispielsweise Leiterbahnen sein können.

5. Schiene (2) nach Anspruch 4, **dadurch gekennzeichnet, dass** die Leitermittel in durch die umgebogenen Ränder entstandenen Aufnahmen oder Kammern (8) angeordnet sind.

6. Sitzschienensystem für ein Kraftfahrzeug, umfassend
- Haltemittel (1) für einen in Schienenlängsrichtung verschiebbaren Sitz,
- eine Schiene (2) mit einer Aufnahme (12), in die die Haltemittel (1) einbringbar sind, sowie mit eine Mehrzahl von in Längsrichtung der Schiene nebeneinander angeordneten Verriegelungsmitteln für die Haltemittel (1), die eine Festlegung des Sitzes in einer gewünschten Position ermöglichen, wobei die Haltemittel (1) nach Einbringung in die Aufnahme der Schiene (2) so verändert, verschoben oder verdreht werden können, dass die Haltemittel (1) in der Aufnahme festgelegt sind,
**dadurch gekennzeichnet, dass** die Schiene (2) eine Schiene (2) nach einem der Ansprüche 1 bis 5 ist.

7. Sitzschienensystem nach Anspruch 6, **dadurch gekennzeichnet, dass** die Haltemittel (1) zumindest teilweise aufgespreizt werden können, so dass die aufgespreizten Teile mit Verriegelungsmitteln der Aufnahme (12) für die Festlegung der Haltemittel (1) zusammenwirken können.

8. Sitzschienensystem nach einem der Ansprüche 6 oder 7, **dadurch gekennzeichnet, dass** an den Haltemitteln (1) mindestens ein Verriegelungselement (6) ausgeklappt oder ausgefahren werden kann, das mit Verriegelungsmitteln der Aufnahme (12) für die Festlegung der Haltemittel zusammenwirken kann.

9. Sitzschienensystem nach einem der Ansprüche 6 bis 8, **dadurch gekennzeichnet, dass** die Haltemittel (1) zumindest teilweise verdreht werden können, so dass die verdrehten Teile mit Verriegelungsmitteln der Aufnahme (12) für die Festlegung der Haltemittel (1) zusammenwirken können.

## Claims

1. Rail (2) for a seat of a motor vehicle comprising
- a recess (12), into which holding means (1) can be inserted for a seat which can be slid in the direction along the rail,
- a plurality of locking means for the holding means (1) disposed next to one another in a longitudinal direction of the rail, which locking means facilitate a fixing of the seat in a desired position,
- a base (3) and two legs (9) extending away from the base (3), between which legs or on which legs the recess (12) for the holding means (1) is formed, wherein the legs (9) have edges which are bent over twice at their sides facing away from the base (3),
**characterised in that**
- both legs (9) form with the base (3) an angle of less than 90°, wherein the edges are bent over to the outside, and wherein the locking means are disposed in the sections (7) of the legs (9) which are extending away from the base (3),
and/or that
- in each case a section (4, 11) of each one of the legs (9) is oriented at an angle of less than 90° to the base (3), wherein the edges are bent over to the inside and wherein the locking means are disposed in the sections (4) of the legs (9) extending to the inside in the direction towards the base (3).

2. Rail (2) according to claim 1, **characterised in that** the angles are between 30° and 60°, preferably between 40° and 50° in size.

3. Rail (2) according to one of claims 1 or 2, **characterised in that** the locking means are slits (5) or openings in the legs (9).

4. Rail (2) according to one of claims 1 to 3, **characterised in that** the rail (2) has electrical conducting means for the seat, wherein the conducting means can for example be conducting tracks.

5. Rail (2) according to claim 4, **characterised in that** the conducting means are disposed in recesses or chambers (8) formed out of the bent-over edges.

6. Seat rail system for a motor vehicle, comprising
- holding means (1) for a seat which can be slid in the direction along the rail,
- a rail (2) with a recess (12) in which the holding means (1) can be inserted, and with a plurality of locking means, disposed next to one another in a longitudinal direction of the rail, for the holding means (1), which facilitate a locking of the seat in a desired position, wherein the holding means (1) after insertion into the recess of the rail (2) can be changed, slid or rotated in such a way that the holding means (1) are locked in the recess,
**characterised in that** the rail (2) is a rail (2) according to one of claims 1 to 5.

7. Seat rail system according to claim 6, **characterised in that** the holding means (1) can be at least partially spread apart, so that the spread-out parts can cooperate with locking means of the recess (12) for the fixing of the holding means (1).

8. Seat rail system according to one of claims 6 or 7, **characterised in that** at the holding means (1) at least one locking element (6) can be unfolded or extended, which can cooperate with the locking means of the recess (12) for the fixing of the holding means.

9. Seat rail system according to one of claims 6 to 8, **characterised in that** the holding means (1) can at least partially be rotated, so that the rotated parts can cooperate with locking means of the recess (12) for the fixing of the holding means (1).

## Revendications

1. Rail (2) pour un siège d'un véhicule automobile, comprenant
- un logement (12) dans lequel des moyens de retenue (1) peuvent être introduits pour un siège mobile dans le sens longitudinal du rail,
- une pluralité de moyens de verrouillage agencés les uns à côté des autres dans le sens longitudinal du rail pour les moyens de retenue (1) qui permettent une fixation du siège dans une position souhaitée,
- une base (3) et deux branches (9) s'étendant loin de la base (3), entre lesquelles ou sur lesquelles le logement (12) pour les moyens de retenue (1) est réalisé, dans lequel les branches (9) présentent sur leurs côtés éloignés de la base (3) des bords repliés deux fois,
**caractérisé en ce que**
- les deux branches (9) forment avec la base (3) un angle inférieur à 90°, dans lequel les bords sont repliés vers l'extérieur, et dans lequel les moyens de verrouillage sont agencés dans les sections (7) des branches (9) s'étendant loin de la base (3),
et/ou **en ce que**
- respectivement une section (4, 11) de chacune des branches (9) est orientée selon un angle inférieur à 90° par rapport à la base (3), dans lequel les bords sont repliés vers l'intérieur et dans lequel les moyens de verrouillage sont agencés dans les sections (4) des branches (9) s'étendant vers l'intérieur en direction de la base (3).

2. Rail (2) selon la revendication 1, **caractérisé en ce que** les angles s'élèvent entre 30° et 60°, de préférence entre 40° et 50°.

3. Rail (2) selon l'une quelconque des revendications 1 ou 2, **caractérisé en ce que** les moyens de verrouillage sont des fentes (5) ou des ouvertures dans les branches (9).

4. Rail (2) selon l'une quelconque des revendications 1 à 3, **caractérisé en ce que** le rail (2) présente des moyens électroconducteurs pour le siège, dans lequel les moyens conducteurs peuvent être par exemple des pistes conductrices.

5. Rail (2) selon la revendication 4, **caractérisé en ce que** les moyens conducteurs sont agencés dans des logements ou chambres (8) apparus de par les bords repliés.

6. Système de rails de siège pour un véhicule automobile, comprenant
- des moyens de retenue (1) pour un siège mobile dans le sens longitudinal du rail,
- un rail (2) avec un logement (12) dans lequel les moyens de retenue (1) peuvent être introduits, ainsi qu'avec une pluralité de moyens de verrouillage agencés les uns à côté des autres dans le sens longitudinal du rail pour les moyens de retenue (1) qui permettent une fixation du siège dans une position souhaitée, dans lequel les moyens de retenue (1) peuvent être modifiés, poussés ou tournés après l'introduction dans le logement du rail (2) de sorte que les moyens de retenue (1) soient fixés dans le logement,
**caractérisé en ce que** le rail (2) est un rail (2) selon l'une quelconque des revendications 1 à 5.

7. Système de rails de siège selon la revendication 6, **caractérisé en ce que** les moyens de retenue (1) peuvent être écartés au moins partiellement de sorte que les parties écartées puissent coopérer avec des moyens de verrouillage du logement (12) pour la fixation des moyens de retenue (1).

8. Système de rails de siège selon l'une quelconque des revendications 6 ou 7, **caractérisé en ce qu'**au moins un élément de verrouillage (6) peut être déplié ou sorti sur les moyens de retenue (1), lequel peut coopérer avec des moyens de verrouillage du logement (12) pour la fixation des moyens de retenue.

9. Système de rails de siège selon l'une quelconque des revendications 6 à 8, **caractérisé en ce que** les moyens de retenue (1) peuvent être tournés au moins partiellement de sorte que les parties tournées puissent coopérer avec des moyens de verrouillage du logement (12) pour la fixation des moyens de retenue (1).
